# EUROPEAN PATENT APPLICATION

(11) **EP 4 730 451 A1**
(43) Date of publication of application: **22.04.2026**
(21) Application number: 24206925.0
(22) Date of filing: 16.10.2024
(51) Int. Cl.: H01M 8/18, H01M 8/0232, H01M 8/0234, H01M 8/2455, H01M 8/2484, H01M 8/1004

(54) **ELECTROCHEMICAL ROD REACTOR**

(71) Applicant: VoltStorage GmbH, 80935 München (DE)
(72) Inventor: Alper, John, 80797 München (DE)
(74) Representative: Grünecker Patent- und Rechtsanwälte PartG mbB

(57) **Abstract**

The invention provides an electrochemical rod reactor (100, 200), comprising a first porous electrode material (10) at an inside of the electrochemical rod reactor and a second porous electrode material (20) at an outside of the electrochemical rod reactor; and an ionic exchange membrane (30) separating the first and the second porous electrode materials; wherein the first porous electrode material is configured to allow a first fluid to contact the ionic exchange membrane at an inner surface of the ionic exchange membrane and the second porous electrode material is configured to allow a second fluid to contact the ionic exchange membrane at an outer surface of the ionic exchange membrane; and wherein the first and second porous electrode materials are electrically conductive.

## Description

### Field of the Invention

The invention relates to an electrochemical rod reactor and a method of using the electrochemical rod reactor, in particular in a redox flow battery.

### Prior Art

In an iron flow battery as an example of a redox flow battery, during charge, hydrogen is produced at the iron plating electrode which results in an excess of Fe³⁺ species being formed at the opposite electrode. The chemistry can be described by the two half reactions:

1) 2Fe²⁺ → 2Fe³⁺ + 2e⁻ (positive electrolyte)

2) 2H⁺ +2e- → H₂ (negative electrolyte)

The subsequent loss of hydrogen gas from the negative electrolyte leads to an overcharged positive electrolyte (or one in which the balance of iron species is imbalanced towards the concentration of Fe³⁺ ions being too high). Driving the reaction in reverse (hydrogen oxidation by Fe³⁺ reduction) in a separate reactor is thus required in order to rebalance the electrolyte.

Here one of the fluids has a significant concentration of Fe³⁺ species and associated anions (the overcharged positive electrolyte), which will degrade the hydrogen oxidation catalyst (supported or unsupported metallic or metal oxide species) in contact with hydrogen gas. This scenario is also important in other flow battery types where hydrogen gas formation is a byproduct of side reactions during battery operation which results in an imbalance in the electrolyte, such as with the iron-chromium, vanadium, or zinc-bromine battery systems.

In the literature fuel cell type reactors, which have a membrane separating the cathode and anode compartments, have been used to facilitate such reactions, as in US 4,159,366 A. These reactors can then be "stacked" in electrical series connection in order to facilitate the reaction of larger quantities of reactants and, when these reactions are used to supply energy, build up a voltage along the stack and increase the power of the reactor as an energy source. However, these reactors also then require additional hardware to manage the electronic component of the reactor, and when an issue in a single cell arises, this can render the entire reactor inoperable.

These electrochemical fuel cell stack type reactors also require management of the hydraulic lines connecting the reactor in order to facilitate hydraulic pressure equilibrium and good interfaces throughout the stack. A single blocked flow channel inside of the stack can again result in cell damage due to starvation of reactants and render the entire reactor inoperable.

Further, there are the concepts of a capillary galvanic reactor and a packed bed reactor. However, the disadvantage thereof is a contact and/or mixing of two reacting fluids. Another issue is a direct contact of the inner and outer fluids to the outer and inner surfaces, respectively, where the catalyst(s) may be. For example, a hydrogen catalyst may not be stable in an iron electrolyte.

### Description of the Invention

It is the object of the present invention to overcome or alleviate at least some of the above-mentioned disadvantages.

The invention provides an electrochemical rod reactor according to claim 1. Further developments are defined in the dependent claims.

Independent claim 1 relates to an electrochemical rod reactor, comprising a first porous electrode material at an inside of the electrochemical rod reactor and a second porous electrode material at an outside of the electrochemical rod reactor; and an ionic exchange membrane separating the first and the second porous electrode materials; wherein the first porous electrode material is configured to allow a first fluid to contact the ionic exchange membrane at an inner, first surface of the ionic exchange membrane and the second porous electrode material is configured to allow a second fluid to contact the ionic exchange membrane at an outer, second surface of the ionic exchange membrane; and wherein the first and second porous electrode materials are electrically conductive.

The electrochemical rod reactor provides a simplified control with the possibility to operate generally without further electronics or voltage applying circuits, but only based on spontaneous reactions at the membrane. The first and second fluid remain distinct from each other, i.e. strictly separated, only allowing an electrochemical reaction across the ionic exchange membrane. In other words, there is no direct contact between the first (inner) and the second (outer) fluids nor between the first fluid and second surface or between the second fluid and the first surface.

In a development of the electrochemical rod reactor according to the invention, the first porous electrode material may be in contact with the inner surface of the ionic exchange membrane and/or the second porous electrode material may be in contact with the outer surface of the ionic exchange membrane.

In another development, the ionic exchange membrane may be configured to allow a spontaneous electrochemical reaction between a first reactant in the first fluid and a second reactant in the second fluid across the ionic exchange membrane, in particular without any external voltage applied between the first and the second porous electrode materials.

According to another development, the first and/or the second porous electrode materials may be carbon based, in particular carbon, graphite fibers, felts, papers, fabrics, or composites with polymer, or the first and/or the second porous electrode materials may be metallic based, in particular metal foams.

According to a further development, the first porous electrode material may be inert in the first fluid and/or the second porous electrode material may be inert in the second fluid.

In another development, the electrochemical rod reactor may further comprise at least one catalyst being in contact with the inside or the outside or both sides or neither side of the ionic exchange membrane.

In a further development, the first and the second porous electrode materials may be in mutual electrical contact through a conductive cap at one end or both ends of the electrochemical rod reactor, at least one of the conductive caps may have an opening in order to allow access of the first fluid to the first porous electrode material, wherein the conductive cap comprises an electrically conductive material, in particular graphite or one or more metals; and/or a sealing cap may be provided at an end of the electrochemical rod reactor without a conductive cap, wherein the material of the sealing cap may comprise plastic material.

According to a further development, the electrochemical rod reactor may have a cylindrical core comprising the first porous electrode material, and in combination with the previous development, the end or ends of the electrochemical rod reactor may correspond to the end or ends along a long axis / symmetry axis of the cylindrical core.

The invention further provides a system, comprising an arrangement of electrochemical rod reactors according to the invention or any of the above developments, the arrangement allowing for a simultaneous flow of the second fluid past the second porous electrode material of each electrochemical rod reactor in the arrangement, in particular the arrangement allowing for flow of the second fluid in a tube or pipe.

In this system, the arrangement may allow for a simultaneous flow of the first fluid to the first porous electrode material of each electrochemical rod reactor in the arrangement.

Here, a simultaneous flow means that the flow path is such that it is not required that a volume of fluid subsequently contacts the individual electrochemical rod reactors, but rather can contact the electrochemical rod reactors at the same time. In other words, the flow path does not require that one electrochemical rod reactor has to be contacted first, before a second electrochemical rod reactor can be contacted. The advantage thereof is that starvation of reactants is avoided, for example, if one of the electrochemical rod reactors fails.

This may be further developed in that the system may comprise a sealing structure separating the flows of the first and second fluid flows from each other and allowing the first fluid and the second fluid to flow in separate fluid conduits past the inner and outer surfaces of the ionic exchange membrane of each electrochemical rod reactor in the arrangement, respectively.

The invention further provides a redox flow battery comprising the electrochemical rod reactor according to the invention or any of the above developments thereof, or comprising the system according to the invention or any of the above developments thereof.

The redox flow battery may be an iron flow battery and the electrochemical rod reactor or the system may be configured to allow the second porous electrode material to be in fluid contact with a positive electrolyte of the iron flow battery so as to reduce excess Fe³⁺ to Fe²⁺, and allow the first porous electrode material to be in fluid contact with hydrogen gas, generated as a byproduct of iron flow battery charging or provided from an external source, such that the hydrogen gas can be oxidized to acidic protons to be transported through the ion exchange membrane to the positive electrolyte.

The invention further provides a method of operating an electrochemical rod reactor, the electrochemical rod reactor comprising a first porous electrode material at an inside of the electrochemical rod reactor and a second porous electrode material at an outside of the electrochemical rod reactor and an ionic exchange membrane separating the first and the second porous electrode materials, wherein the first and second porous electrode material are electrically conductive, the method comprising: contacting a first fluid in the first porous electrode material with the ionic exchange membrane at an inner surface of the ionic exchange membrane; and contacting a second fluid in the second porous electrode material with the ionic exchange membrane at an outer surface of the ionic exchange membrane, thereby allowing a spontaneous electrochemical reaction between a first reactant in the first fluid and a second reactant in the second fluid across the ionic exchange membrane.

The method may be developed in that no external voltage is applied between the first and the second porous electrode materials, or an external voltage is applied between the first and the second porous electrode materials to enhance the electrochemical reaction.

The electrochemical rod reactor may be used in industrial applications where an inner or outer catalyst or electrode material is not stable in the outer or inner fluid, respectively, and where a spontaneous electrochemical reaction is desirable without gaining any benefit from the electrical potential generated.

Further features and exemplary embodiments as well as advantages of the present invention will be explained in greater detail hereinafter with reference to the drawings. It is understood that the specific embodiments do not limit the present invention.

### Brief Description of the Drawing

- Fig. 1: shows an example embodiment of the electrochemical rod reactor, face on and top down cross sections.
- Fig. 2: shows an example embodiment of the electrochemical rod reactor performing Fe³⁺ reduction in the outer fluid and hydrogen oxidation in the inner fluid.
- Fig. 3A-C: show example embodiments of an array of rod reactors in a flow of different types.

### Embodiments

The invention is described in detail for the following embodiments with respect to the accompanying drawings.

The invention is an electrochemical reactor, designed to facilitate a spontaneous electrochemical reaction, or one in which it is thermodynamically favored to occur, or one in which no external voltage need be applied to the electrochemical system in order to drive the chemistry. The reaction kinetics of which can be increased however by applying an external voltage. The reactor is specifically designed to facilitate an electrochemical reaction in which it is desirable to have barrier between two fluids, each containing at least one of the reactant species, to prevent mixing and to prevent the reactive surfaces from being in contact with the separated fluids.

To facilitate the chemistry as in a fuel cell type reactor according to the prior art, but to simplify and add robustness in systems where the output power is not the product of the spontaneous electrochemical reaction, but instead it is the reactants, the invention proposes the Electrochemical Rod Reactor. It is comprised of a cylindrical core of an electrically conductive, porous, and inert material, such as carbon pellets, carbon felt, carbon paper, pelletized carbon-polymer composite, packed carbon fibers, or graphitic versions of any of these materials. This core is then encapsulated by a selective ionically conducting membrane, which creates a barrier between the core and the external fluid, but allows ionic reaction products to be exchanged between the two fluids. This cylindrical structure is then further encapsulated in a porous carbon material such as carbon pellets, carbon felt, carbon paper, pelletized carbon-polymer composite, packed carbon fibers, or graphitic versions of any of these materials. The physical structure of the rod reactor is designed such that mechanical forces due to variations in local pressure between the interior and exterior reactor components during normal operation, are compensated by the mechanical structure of the reactor components themselves.

A catalyst may be present near the internal surface of the membrane, the external surface of the membrane, or both, in order to catalyze the anodic or cathodic reactions. Depending on the orientation of the electrochemical reactor in the reactor system, the interior of the cylinder may be the cathodic or anodic side.

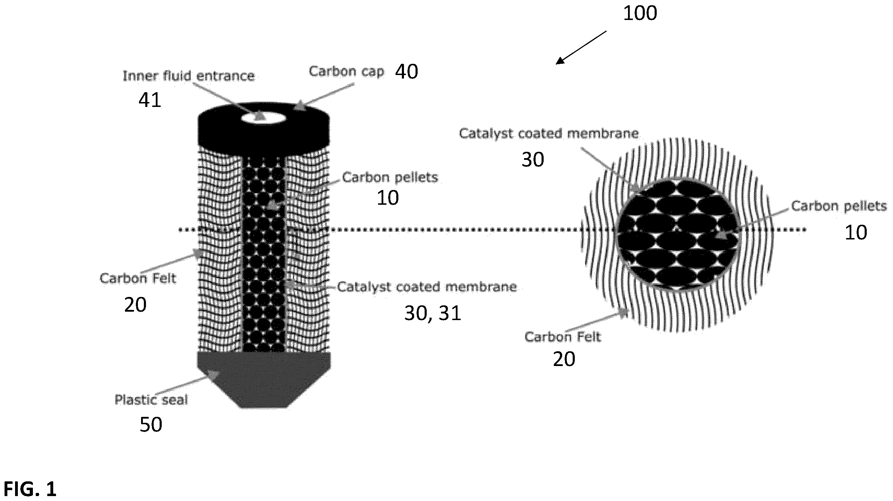

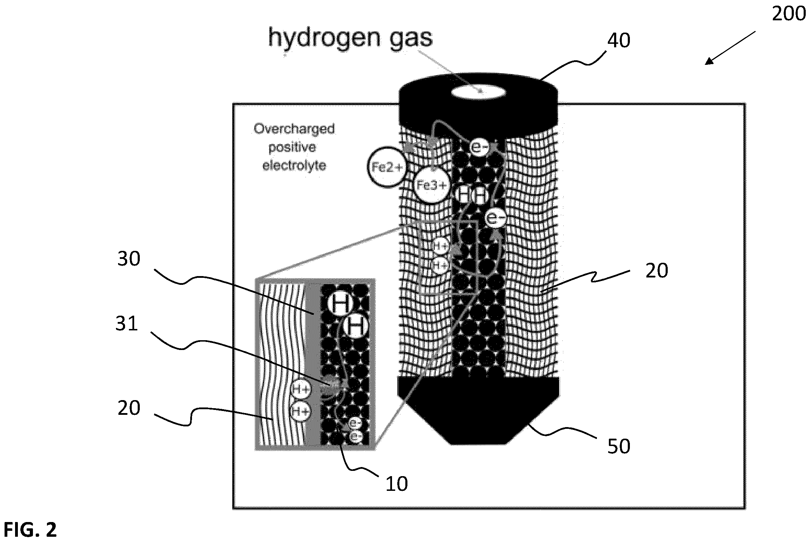

The entire structure is then capped by an inert and electron conducting material, to create an electron conduction path between the interior and exterior layers of the reactor. The cap has a passage in it to allow one of the reaction fluids to contact the interior of the cylinder core. The structure can be seen in Fig. 1 (further described below), and an example of the chemical reaction mechanism is described in Fig. 2 (further described below), wherein the example of hydrogen oxidation by iron recombination for one of the reactor embodiments is exemplified.

The entire structure may then be sealed in a secondary structure which could be a tube, pipe, or duct, which enables the second reaction fluid to flow through the external porous layer of the reactor. The electrochemical reactor is then sealed into the secondary structure in such a way that the interior of the rod is only exposed to the first reaction fluid, and the exterior is only exposed to the second reaction fluid. The internal and external inert, porous, and electronically conductive materials comprising the reactor are only in electronic contact through the electronically conductive cap. The only physical exchange between the two materials is through the selective membrane which separates the two.

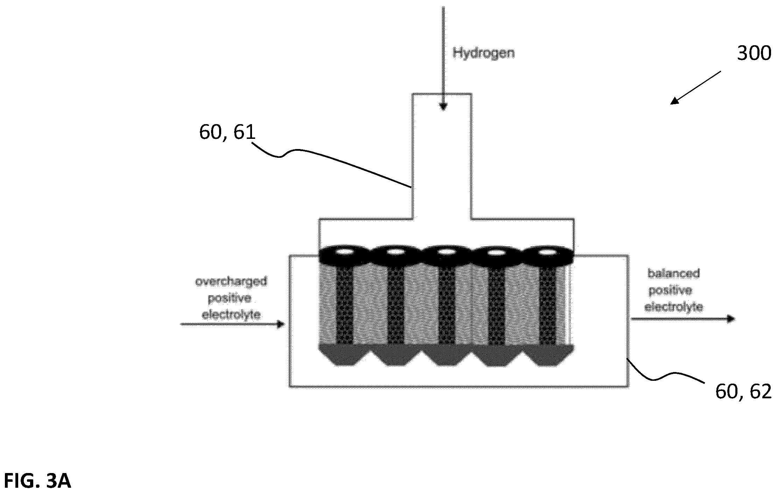

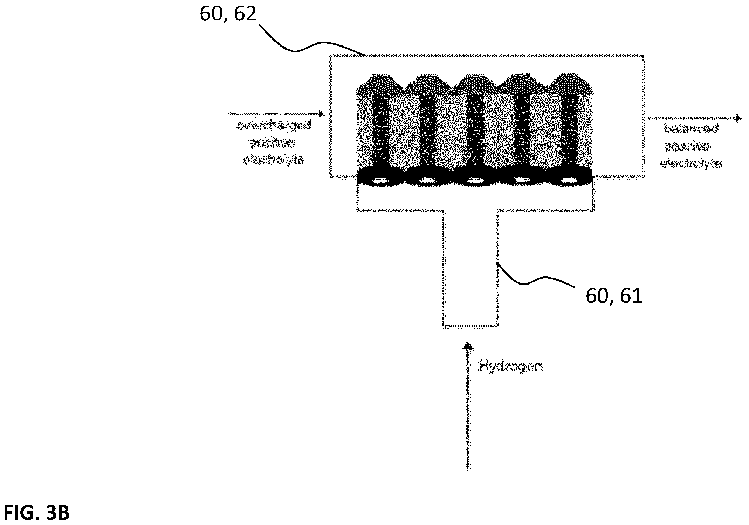

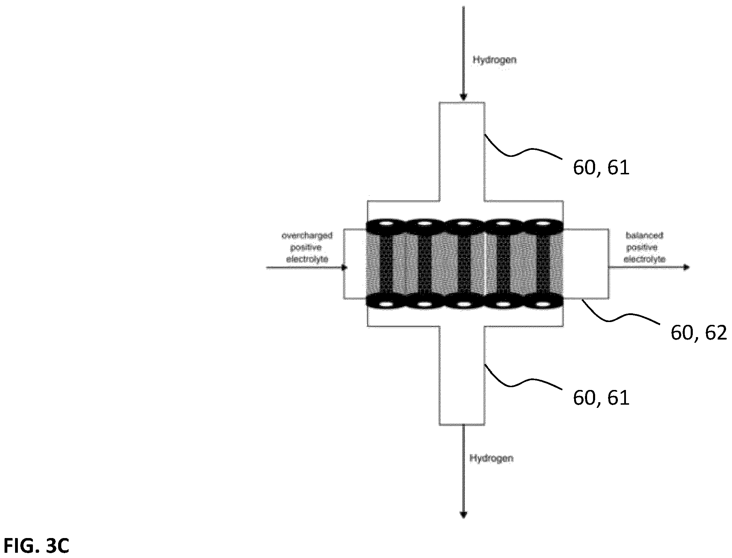

The Rod Reactor can be capped on one or both ends in such a ways as to allow the inner reaction fluid to flow through the structure and exit, or in such a way that the interior of the reaction rod is a dead end, depending on the embodiment of the reaction system. These example embodiments are shown in Fig. 3 (further described below), although this is not an exhaustive description of the potential embodiments.

The secondary structure can house a plurality of the Rod Reactors which are arranged in such a way as to allow a simultaneous flow through them and around them. In this way, the reactor system can be scaled to increase the throughput and actual reaction rate. If a single rod reactor is damaged in some way, all of the remaining rod reactors act independently and so continue to operate. As they are not in electrical series, if there is a temporary starvation of reactants to one of the Rod Reactors, there is no risk of damage due to an imbalanced rate of reaction compared to the neighboring Rod Reactors.

There is no need to control the electronic component of the system, however in one embodiment of the reaction, the rod reactors are connected in parallel, such that a voltage can be applied across them in order to drive the reaction faster.

The rod reactors can be arranged in such a way as that the second reaction fluid is flowing along the long axis (symmetry axis) of the Reaction Rod or perpendicular to the long axis. The orientation can further be varied as shown in the figures.

The Electrochemical Rod Reactor presents a simpler and more robust electrochemical reactor embodiment compared to fuel cell reactors, for facilitating spontaneous electrochemical reactions, where the product is the not power, but the reaction products, such as in the rebalancing of an iron flow battery or any other flow battery where the generation of hydrogen leads to one battery electrolyte being overcharged.

The Electrochemical Rod Reactor is also more robust than other passive reactors for facilitating these types of reactions, such as a capillary galvanic reactor, as the two reactive surfaces remain separated by a membrane, and thus corrosive and poisoning reactive fluids remain separate from the catalyst surfaces.

Fig. 1 shows an example embodiment of the electrochemical rod reactor, face on and top down cross sections.

The electrochemical rod reactor 100 of Fig. 1 comprises a first porous electrode material 10 at an inside of the electrochemical rod reactor 100 and a second porous electrode material 20 at an outside of the electrochemical rod reactor 100; and an ionic exchange membrane 30 separating the first and the second porous electrode material.

The first porous electrode material 10 is configured to allow a first fluid to contact the ionic exchange membrane 30 at an inner surface of the ionic exchange membrane 30 and the second porous electrode material 20 is configured to allow a second fluid to contact the ionic exchange membrane 30 at an outer surface of the ionic exchange membrane 30, wherein the first and second porous electrode materials 10, 20 are electrically conductive.

The left side of Fig. 1 shows the electrochemical rod reactor 100 in a partially vertical cross section, while the right side shows a horizontal cross section.

The first porous electrode material 10 is in contact with the inner surface of the ionic exchange membrane 30 and the second porous electrode material 20 is in contact with the outer surface of the ionic exchange membrane 30. The ionic exchange membrane 30 allows a spontaneous electrochemical reaction between a first reactant in the first fluid and a second reactant in the second fluid across the ionic exchange membrane 30, without any external voltage applied between the first and the second porous electrode materials 10, 20.

The first and the second porous electrode materials 10, 20 are carbon based, for example carbon, graphite fibers, felts, papers, fabrics, or composites with polymer, or the first and/or the second porous electrode material may be metallic based, in particular metal foams. The first porous electrode material 10 is inert in the first fluid and the second porous electrode material 20 is inert in the second fluid.

The electrochemical rod reactor 100 further comprises a catalyst 31 in contact with the inside or the outside or both sides or neither side of the ionic exchange membrane 30, in this example on the inside.

The first and the second porous electrode materials are in mutual electrical contact through a conductive cap 40 at one end (here the upper end) of the electrochemical rod reactor 100. The conductive cap has an opening 41 in order to allow access of the first fluid to the first porous electrode material 10. The conductive cap 40 comprises an electrically conductive material, such as graphite or one or more metals.

Further, a sealing cap 50 is provided at the other end (here lower end) of the electrochemical rod reactor 100 without the conductive cap 40. The sealing cap 50 is formed from plastic material, for example.

Fig. 2 corresponds to Fig. 1, but for a specific example for the reactants in a redox flow battery (e.g. iron salt battery).

Fig. 2 shows an example embodiment of the electrochemical rod reactor 200 performing Fe³⁺ reduction to Fe²⁺ in the outer fluid and hydrogen oxidation (H₂ to 2H⁺) in the inner fluid (the fluids themselves are not shown). A zoom-in shows the hydrogen gas H₂ reacting on the catalyst surface 31 and the H⁺ ions transferring through the ion exchange membrane 30, while the electrons (e⁻) travel through the inner carbon material 10.

Fig. 3A, 3B, 3C show example embodiments of an array of rod reactors in a flow of different types. This embodiment is an example for application in a redox flow battery. The exact reverse is also possible, where the overcharged positive electrolyte acts as the inner fluid, while hydrogen gas acts as the outer fluid.

The system 300 comprises an arrangement (a plurality) of electrochemical rod reactors, the arrangement allowing for a simultaneous flow of the second fluid (containing overcharged positive electrolyte) past the second porous electrode material of each electrochemical rod reactor in the arrangement, in particular the arrangement allowing for flow of the second fluid in a tube or pipe 62.

In this system 300, the arrangement also allows for parallel flow of the first fluid (containing hydrogen gas) to the first porous electrode material of each electrochemical rod reactor in the arrangement.

This system 300 comprises a sealing structure 60 separating the flows of the first and second fluid flows from each other and allowing the first fluid and the second fluid to flow in separate fluid conduits 61, 62 past the inner and outer surfaces of the ionic exchange membrane of each electrochemical rod reactor in the arrangement, respectively.

In Fig. 3A, the flow of hydrogen is from above, the electrochemical rod reactors are open at the top and closed (by a respective sealing cap) at the bottom. In Fig. 3B, the flow of hydrogen is from below, the electrochemical rod reactors are open at the bottom and closed (by a respective sealing cap) at the top. In Fig. 3C, the flow of hydrogen is from above and through the electrochemical rod reactors, which are open at the top and at the bottom.

Hydrogen gas flows in fluid conduit (tube, pipe) 61 into the system, while in fluid conduit (tube, pipe) 62 overcharged positive electrolyte enters the system and then exits the system as balanced positive electrolyte.

The embodiments are only exemplary and the full scope of the present invention is defined by the claims.

## Claims

1. An electrochemical rod reactor (100, 200), comprising:
a first porous electrode material (10) at an inside of the electrochemical rod reactor and a second porous electrode material (20) at an outside of the electrochemical rod reactor; and
an ionic exchange membrane (30) separating the first and the second porous electrode material;
wherein the first porous electrode material (10) is configured to allow a first fluid to contact the ionic exchange membrane (30) at an inner surface of the ionic exchange membrane and the second porous electrode material (20) is configured to allow a second fluid to contact the ionic exchange membrane (30) at an outer surface of the ionic exchange membrane; and
wherein the first and second porous electrode materials (10, 20) are electrically conductive.

2. The electrochemical rod reactor according to claim 1, wherein the first porous electrode material (10) is in contact with the inner surface of the ionic exchange membrane (30) and/or wherein the second porous electrode material (20) is in contact with the outer surface of the ionic exchange membrane (30).

3. The electrochemical rod reactor according to claim 1 or 2, wherein the ionic exchange membrane (30) is configured to allow a spontaneous electrochemical reaction between a first reactant in the first fluid and a second reactant in the second fluid across the ionic exchange membrane (30), in particular without any external voltage applied between the first and the second porous electrode materials (10, 20).

4. The electrochemical rod reactor according to any one of claims 1 to 3, wherein the first and/or the second porous electrode materials (10, 20) are carbon based, in particular carbon, graphite fibers, felts, papers, fabrics, or composites with polymer, or wherein the first and/or the second porous electrode materials (10, 20) are metallic based, in particular metal foams.

5. The electrochemical rod reactor according to any one of claims 1 to 4, wherein the first porous electrode material (10) is inert in the first fluid and/or wherein the second porous electrode material (20) is inert in the second fluid.

6. The electrochemical rod reactor according to any one of claims 1 to 5, further comprising at least one catalyst (31) being in contact with the inside or the outside or both sides or neither side of the ionic exchange membrane (30).

7. The electrochemical rod reactor according to any one of claims 1 to 6, wherein
the first and the second porous electrode materials (10, 20) are in mutual electrical contact through a conductive cap (40) at one end or both ends of the electrochemical rod reactor, at least one of the conductive caps having an opening (41) in order to allow access of the first fluid to the first porous electrode material (10), wherein the conductive cap (40) comprises an electrically conductive material, in particular graphite or one or more metals; and/or
wherein a sealing cap (50) is provided at an end of the electrochemical rod reactor without a conductive cap.

8. The electrochemical rod reactor according to any one of claims 1 to 7, wherein the electrochemical rod reactor has a cylindrical core comprising the first porous electrode material (10), and wherein in combination with claim 7 the end or ends of the electrochemical rod reactor correspond to the end or ends along a symmetry axis of the cylindrical core.

9. A system (300), comprising an arrangement of electrochemical rod reactors according to any one of claims 1 to 8, the arrangement allowing for a simultaneous flow of the second fluid past the second porous electrode material (20) of each electrochemical rod reactor in the arrangement.

10. The system according to claim 9, wherein the arrangement allows for a simultaneous flow of the first fluid to the first porous electrode material (10) of each electrochemical rod reactor in the arrangement.

11. The system according to claim 10, further comprising a sealing structure (60) separating the flows of the first and second fluid flows from each other and allowing the first fluid and the second fluid to flow in separate fluid conduits (61, 62) past the inner and outer surfaces of the ionic exchange membrane (30) of each electrochemical rod reactor in the arrangement, respectively.

12. A redox flow battery (200, 300), comprising the electrochemical rod reactor according to any one of claims 1 to 8, or comprising the system according to any one of claims 9 to 11.

13. The redox flow battery according to claim 12, wherein the redox flow battery is an iron flow battery and the electrochemical rod reactor or the system is configured to:
allow the second porous electrode material to be in fluid contact with a positive electrolyte of the iron flow battery so as to reduce excess Fe³⁺ to Fe²⁺, and
allow the first porous electrode material to be in fluid contact with hydrogen gas, generated as a byproduct of iron flow battery charging or provided from an external source, such that the hydrogen gas can be oxidized to acidic protons to be transported through the ion exchange membrane to the positive electrolyte.

14. A method of operating an electrochemical rod reactor, the electrochemical rod reactor comprising a first porous electrode material at an inside of the electrochemical rod reactor, a second porous electrode material at an outside of the electrochemical rod reactor and an ionic exchange membrane separating the first and the second porous electrode materials, wherein the first and second porous electrode materials are electrically conductive, the method comprising:
contacting a first fluid in the first porous electrode material with the ionic exchange membrane at an inner surface of the ionic exchange membrane; and
contacting a second fluid in the second porous electrode material with the ionic exchange membrane at an outer surface of the ionic exchange membrane, thereby allowing a spontaneous electrochemical reaction between a first reactant in the first fluid and a second reactant in the second fluid across the ionic exchange membrane.

15. The method of claim 14, wherein no external voltage is applied between the first and the second porous electrode materials, or wherein an external voltage is applied between the first and the second porous electrode materials to enhance the electrochemical reaction.
